# DEMANDE DE BREVET EUROPEEN

(11) **EP 1 726 834 A2**
(43) Date de publication de la demande: **29.11.2006**
(21) Numéro de dépôt: 06290842.1
(22) Date de dépôt: 23.05.2006
(51) Int. Cl.: F16B 5/06

(54) **Assemblage réversible d'une pièce sur un support fixe**

(30) Priorité: 26.05.2005 FR 0505312
(71) Demandeur: PEUGEOT CITROËN AUTOMOBILES S.A., 78140 Velizy Villacoublay (FR)
(72) Inventeur: Peron, Rodolphe, 92400 Courbevoie (FR)
(74) Mandataire: Berger, Helmut

(57) **Abrégé**

L'invention concerne un assemblage réversible d'une pièce (1) sur un support fixe, la pièce (1) étant pourvue d'un trou de passage (11) traversant la pièce (1) et ayant une paroi (12) s'étendant entre un premier bord (13) et un second bord (14) opposé au premier bord (13) du trou de passage (11). Selon l'invention, l'assemblage comprend un goujon (3) immobile et solidaire du support fixe, et un insert (2) creux conformé pour être placé dans le trou de passage (11) de la pièce (1) et pour recevoir ultérieurement, dans sa partie creuse (23), ledit goujon (3), l'insert (2) comportant des premiers moyens d'arrêt (21, 26) avec des premiers moyens anti-retour (26) permettant l'introduction de l'insert (2) dans le trou de passage (11) de la butée (1), mais empêchant l'insert (2) ensuite d'en sortir, et des seconds moyens anti-retour (27) permettant l'introduction du goujon (3) dans l'insert (2), mais empêchant le goujon (3) ensuite d'en sortir par translation axiale, l'assemblage étant démontable par rotation de l'insert (2) autour du goujon (3).

L'invention concerne également un véhicule comportant un tel assemblage.

## Description

L'invention concerne un assemblage réversible d'une pièce sur un support fixe, la pièce formant notamment butée pour limiter la course d'un organe monté mobile dans un véhicule automobile, ainsi qu'un véhicule automobile comportant un tel assemblage.

Dans un véhicule automobile, la course de certaines pièces montées mobiles telles que, par exemple, des pédales permettant au conducteur du véhicule d'exercer des fonctions nécessaires à la conduite ou à la manoeuvre du véhicule, doit pouvoir être limitée. En effet, la pédale d'accélérateur est généralement montée pivotante sur le plancher du véhicule ou sur le plancher de la cabine de conduite, alors que les pédales d'embrayage et de frein sont généralement montées suspendues. La pédale d'embrayage agit généralement sur la première partie de sa course. La seconde partie de sa course peut s'étendre jusqu'au plancher du véhicule ou de la cabine de conduite sans que cela ne produise d'effet néfaste. Toutefois, pour éviter une surcharge de la mécanique de l'embrayage, notamment du câble reliant la pédale au mécanisme de l'embrayage, il pourrait être utile de limiter la course de la pédale par une butée montée sur le plancher du véhicule. En ce qui concerne la pédale de frein, une limitation de la course de la pédale est inutile, ou même pas souhaitable, puisque la course de la pédale est régie par le réglage des freins. Il en est de même de la pédale de frein de stationnement existant dans certains véhicules automobiles.

En ce qui concerne maintenant la pédale d'accélérateur, la situation est différente, ne serait-ce que du fait du montage au plancher, ce qui expose cette pédale incomparablement plus que les deux autres pédales à une surcharge par le conducteur du véhicule. Ceci est non seulement dû à la position de montage de la pédale d'accélérateur, par opposition à la position de montage des deux autres pédales, mais cela est surtout dû au fait que la chaîne de commande mécanique du système d'accélération n'oppose que de faibles résistances à l'appui du conducteur. Il est donc indispensable de prévoir une butée pour la pédale d'accélérateur afin d'éviter une sur-course de cette pédale, sur-course qui pourrait entraîner la destruction de cette pédale, voire même d'autres éléments de la chaîne mécanique.

Les butées utilisées pour limiter la course de pièces mobiles sont habituellement des pièces qui sont montées en usine de production. Jusqu'à maintenant, la butée est une pièce indémontable, ce qui pose un problème lors de réparations. Toutefois, il parait souhaitable de rendre la butée également démontable pendant la production d'un véhicule, lorsqu'il s'agit de devoir effectuer des retouches au véhicule.

La butée utilisée par exemple pour limiter la course de la pédale d'accélérateur est une pièce de sécurité, car si cette butée n'est pas montée ou si elle est perdue, il y a un risque de coincement de la pédale d'accélérateur comme suite de la sur-course. La butée doit donc être montée de manière qu'elle ne puisse pas se démonter elle-même, ni accidentellement ni par les vibrations du véhicule ni par toute autre influence. En contrepartie, la butée doit être montée en une opération rapide et avec un minimum d'outillages. Pour cette raison, la butée d'accélérateur est actuellement montée en force sur un goujon à pas couché qui est soudé sur le tablier inférieur du véhicule. Une fois mise en place, la butée doit résister à différents efforts dont les efforts de compression et des efforts d'arrachement.

L'assemblage selon l'invention permet de monter une butée sur un goujon solidaire d'un support fixe du véhicule, comme le tablier, sur lequel est monté l'organe mobile, comme par exemple la pédale d'accélérateur.

Cet assemblage doit donc répondre à deux contraintes essentielles : il doit résister à différents efforts exercés sur la butée, notamment de compression et d'arrachement, et il doit être simple, rapide et réversible.

Il est connu du document GB 2 210 403 un dispositif d'accouplement de deux pièces comprenant une vis et une agrafe apte à coopérer avec la vis, ces éléments étant formés en résine ou en nylon. L'agrafe comprend un orifice destiné à recevoir la vis et dans lequel s'étendent des pattes flexibles permettant l'introduction de la vis dans l'orifice mais empêchant la vis de sortir de cet orifice par translation axiale. Pour sortir la vis de l'agrafe, il est nécessaire de tourner la vis au moyen d'un outil adéquat coopérant avec un logement ménagé dans la tête de la vis.

Ce dispositif d'accouplement n'est pas envisageable pour l'assemblage d'une butée sur un support fixe.

En effet :
- pour avoir un montage réversible, il est nécessaire que la vis soit accessible par un opérateur, imposant ainsi la fixation de l'agrafe, formée préférentiellement en matière plastique, sur le tablier, au risque de dégrader la résistance de l'assemblage aux diverses contraintes ; et
- pour avoir un montage solide et résistant, la vis doit être solidaire du tablier et fabriquée en acier, rendant ainsi la tête de vis inaccessible car solidaire du tablier. De la sorte, un tel dispositif d'accouplement rendrait indémontable l'assemblage de la butée sur le tablier.

Le but de l'invention est de proposer un assemblage d'une butée ou d'un dispositif formant butée qui palie les inconvénients énoncés ci avant et qui puisse être monté rapidement et avec le moins d'effort possible sur un goujon immobile, solidaire d'un support fixe du véhicule. De plus, la solution proposée doit pouvoir être utilisée pour tout type de pièce soumis à des efforts d'arrachage et de compression élevés, formant par exemple butée d'un quelconque organe monté mobile dans un véhicule automobile, l'invention ne doit donc pas être limitée à une application particulière telle que la limitation de la course d'une pédale.

Le but de l'invention est atteint avec un assemblage réversible d'une pièce sur un support fixe, la pièce étant pourvue d'un trou de passage traversant la pièce et ayant une paroi s'étendant entre un premier bord et un second bord opposé au premier bord du trou de passage. Selon l'invention, l'assemblage comprend un goujon immobile et solidaire d'un support fixe et un insert creux conformé pour être placé dans le trou de passage de la butée et pour recevoir ultérieurement le goujon dans sa partie creuse, l'insert comportant des premiers moyens d'arrêt avec des premiers moyens anti-retour permettant l'introduction de l'insert dans le trou de passage de la butée, mais empêchant l'insert ensuite d'en sortir, et des seconds moyens anti-retour permettant l'introduction du goujon dans l'insert, mais empêchant le goujon ensuite d'en sortir par translation axiale.

De plus, l'assemblage selon l'invention est démontable par rotation de l'insert autour du goujon.

La pièce destinée à être assemblée sur le support fixe, comme par exemple une butée d'organe mobile, est réalisée de préférence en matière plastique, mais elle peut tout aussi bien être réalisée en tout autre matière, métallique ou non, et être obtenue par tout type de procédé approprié, par exemple par un moulage par injection, par estampage ou par usinage. La butée est percée d'un trou de passage dans lequel viendra se loger un insert réalisé en une matière élastiquement déformable.

L'insert est réalisé avantageusement en une matière plastique et comporte des parties élastiquement déformable. L'insert permet la fixation de la butée sur le tablier d'un véhicule automobile et permet également le démontage de la butée, comme cela sera expliqué plus loin.

L'insert est une pièce creuse conformé à la fois pour être placé dans le trou de passage de la butée et pour recevoir ultérieurement, dans la partie creuse, un goujon solidaire du tablier sur lequel est monté la pédale. L'insert coopère étroitement avec le goujon moyennant lequel la butée sera fixée sur le tablier et duquel la butée peut également être démontée sans difficulté.

Afin que l'insert puisse remplir son rôle comme intermédiaire entre la butée et le goujon, l'insert est conformé pour pouvoir se clipper dans le trou de passage de la butée et pour s'engager sur le goujon de manière que la butée peut être fixée sur le goujon par un mouvement de translation orienté sensiblement parallèle à l'axe du goujon, mais que le goujon soit ensuite empêché de sortir de la partie creuse de l'insert par mouvement de translation axiale.

Le goujon est formé d'une tige avantageusement en acier et soudée au support fixe, participant ainsi à la résistance de l'assemblage aux efforts d'arrachage et de compression.

L'assemblage de l'invention comporte également l'une ou plusieurs des caractéristiques ci-après, considérés isolément ou selon toute combinaison techniquement possible :
- l'insert comporte deux extrémités opposées dont l'une est conformée pour limiter la course d'introduction de l'insert dans la butée, cette extrémité faisant partie des premiers moyens d'arrêt ;
- les premiers moyens anti-retour comportent des pattes flexibles avec des extrémités libres orientées vers l'extérieur de l'insert et conformées pour fléchir radialement vers l'intérieur de l'insert lors de l'introduction de l'insert dans le trou de passage de la butée et pour s'accrocher, à la fin de la mise en place de l'insert, sur une partie appropriée de la butée ;
- les pattes flexibles sont orientées sensiblement parallèlement à un axe longitudinal de l'insert, leur longueur étant déterminée de manière à ce que les extrémités libres puissent s'accrocher, à la fin de la mise en place de l'insert, sur le second bord du trou de passage de la butée ;
- les pattes flexibles sont orientées sensiblement parallèlement à un axe longitudinal de l'insert, leur longueur étant déterminée de manière à ce que les extrémités libres puissent s'accrocher, à la fin de la mise en place de l'insert, sur un épaulement formé en retrait par rapport au second bord du trou de passage de la butée ;
- les seconds moyens anti-retour comportent des éléments disposés sur une paroi de la partie creuse de l'insert et conformés pour s'étendre vers un axe longitudinal de la partie creuse de l'insert avant une première utilisation de l'insert, pour épouser élastiquement et plus ou moins entièrement la paroi pendant l'introduction du goujon dans l'insert et pour s'étendre à nouveau vers l'axe longitudinal de la partie creuse après l'insertion du goujon ;
- le goujon comporte un filetage s'étendant au moins sur une partie de l'étendue axiale du goujon et permettant aux éléments disposés sur la paroi de la partie creuse de l'insert de s'y engager après l'insertion du goujon ;
- l'insert comporte deux extrémités opposées et est pourvu sur la première de ces extrémités, qui est opposée à la seconde extrémité par laquelle l'insert est introduit dans le trou de passage de la butée, d'un trou conformé pour recevoir un outil pour le démontage de la butée par dévissage ;
- le trou conformé pour recevoir un outil forme un seul passage avec la partie creuse de l'insert ;
- le trou conformé pour recevoir un outil forme un trou borgne.

Le but de l'invention est également atteint avec un véhicule, notamment un véhicule automobile, comprenant un assemblage tel que décrit ci-avant d'une pièce formant butée d'un organe monté mobile sur un support fixe de ce véhicule.

D'autres caractéristiques et avantages de la présente invention ressortiront de la description ci-après d'un mode de réalisation du dispositif de l'invention. La description est faite en référence aux dessins dans lesquels :
- la figure 1 montre la butée destinée à être assemblée sur un support fixe,
- la figure 2 montre l'insert de l'assemblage selon l'invention,
- la figure 3 montre une butée en une coupe axiale après mise en place sur un goujon par assemblage selon l'invention, et
- la figure 4 montre la butée de l'invention dégagée du goujon.

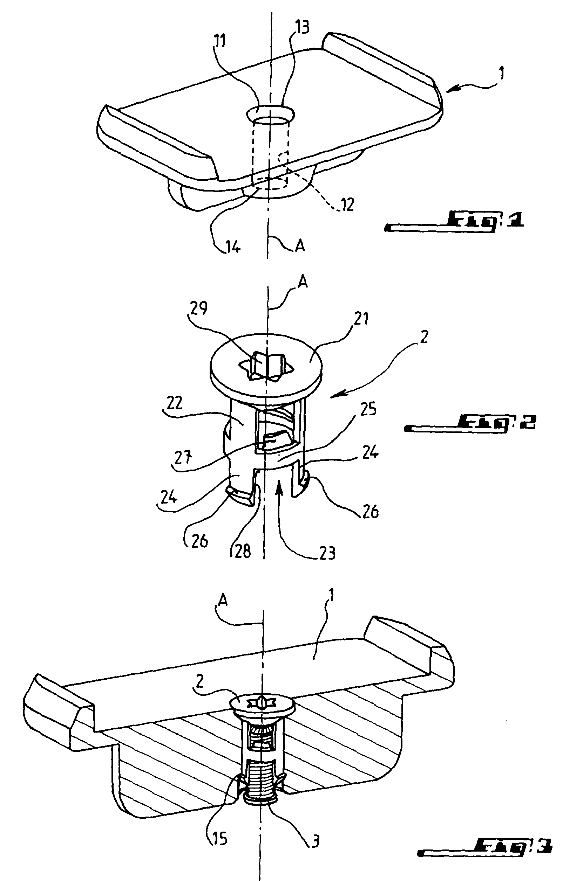

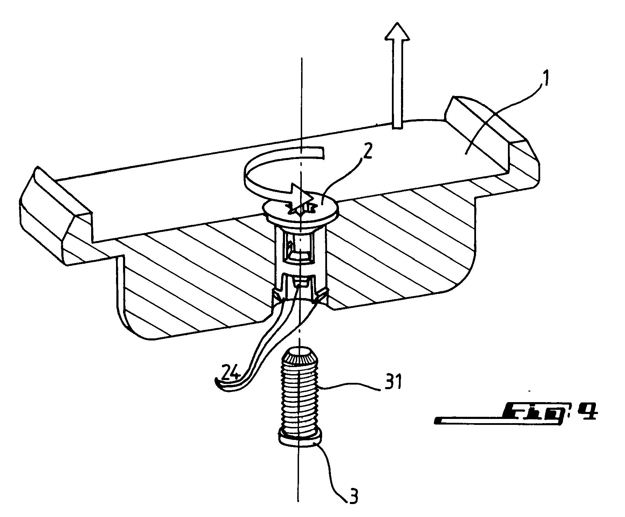

Les figures 1 à 3 montrent, en une représentation axialement alignée, d'abord séparément deux pièces de l'assemblage selon l'invention, à savoir une butée sur la figure 1, un insert sur la figure 2, et la butée assemblée et mis en place sur un goujon moyennant lequel la butée de l'invention est fixée sur un support fixe, par exemple un tablier, d'un véhicule automobile.

L'assemblage de l'invention comprend donc essentiellement une butée 1, un insert 2 et un goujon 3. La butée 1 est pourvue d'un trou de passage 11 traversant la butée 1 et ayant une paroi 12 s'étendant entre un premier bord 13 et un second bord 14 opposé au premier bord 13 pour le passage 11.

L'insert 2 est une pièce creuse conformée pour être placée dans le trou de passage 11 de la butée 1. Le trou de passage 11 et l'insert 2 ont donc des formes complémentaires. Selon la représentation dans les dessins, le trou de passage 11 a une forme cylindrique droite avec une section circulaire. Toutefois, toute autre forme ronde ou angulaire permet également d'obtenir les effets de l'invention. Ainsi, le trou de passage pourrait tout aussi bien avoir une section transversale rectangulaire, notamment carrée, et l'insert 2 aurait alors une forme essentiellement parallélépipédique.

De même, le trou de passage 11 peut avoir une forme entièrement cylindrique droite. Toutefois, il est préférable de donner au trou de passage 11 proche du premier bord 13, c'est-à-dire du bord par lequel l'insert 2 est introduit dans la butée 1, une forme tronconique ou une forme cylindrique, autrement dit et de manière plus générale, la forme d'un évasement vers le bord 13. Cette disposition permet de pourvoir l'insert 2 d'une tête 21 plus large qu'un corps 22 de l'insert 2. La tête 21 limitera ainsi la course d'introduction de l'insert dans la butée 1 et empêche l'insert 2 de sortir du trou de passage 11 par le second bord 14 de celui-ci. En même temps, l'évasement du trou de passage 11 proche du premier bord 13 permet de pourvoir l'insert 2 de premiers moyens d'arrêt, décrits plus loin, sans que l'insert 2 ne dépasse du premier bord 13.

L'insert 2 comprend une partie creuse 23 destinée à recevoir le goujon 3 au moment de l'assemblage de la butée de l'invention sur un véhicule automobile.

L'insert 2 est représenté sur la figure 2 comme une pièce cylindrique de révolution. Cela signifie que non seulement la forme extérieure est essentiellement celle d'un cylindre droit de révolution, mais que la partie creuse 23 a également une forme essentiellement cylindrique de révolution. Le corps 22 de l'insert 2 est formé, dans la réalisation représentée, par trois pattes 24 prenant naissance à la tête 21 de l'insert 2 et s'étendant parallèlement par rapport à un axe longitudinal A qui est en commun au trou de passage 11, à l'insert 2 et au goujon 3. Les trois pattes 24 sont disposées sur le pourtour d'une enveloppe cylindrique de manière équidistante les unes par rapport aux autres et sont reliées entre elles par une partie annulaire 25 s'étendant transversalement par rapport à l'axe A et à la fois à une première distance axiale de la tête 21 et à une second distance axiale, généralement inférieure à la première, des extrémités libres des pattes 24. Les extrémités libres des pattes 24 sont pourvues de dents 26 orientées vers l'extérieur de l'insert et destinées à se loger sur une partie appropriée de la butée, par exemple un épaulement 15 réalisé dans la butée, lorsque l'insert 2 est mis en place.

L'insert 2 comprend ainsi :
- trois pattes 24, un élément annulaire 25 et des dents 26 orientées vers l'extérieur ;
- des premiers moyens d'arrêt 21, 26 et
- des seconds moyens anti-retours 27.

Le fait d'avoir donné les mêmes numéros de référence 24 à chacune des trois pattes de l'insert 2 doit souligner que le nombre de pattes, ici trois, est arbitraire et que toute autre quantité de pattes peut être choisie sans sortir du principe de la présente invention. De plus, les pattes 24 ont toutes la même forme et les mêmes dimensions et sont pourvues de dents 26 de même forme et de mêmes dimensions.

L'insert 2 comprend ainsi des premiers moyens d'arrêt formés par la tête 21 et les dents 26 formant des premiers moyens anti-retours. Les extrémités libres des pattes 24 étant élastiquement déformables, pour le moins pour fléchir radialement vers l'intérieur de l'insert 2 lors de l'introduction de l'insert dans l'ouverture 11 de la butée 1, l'insert 2 comporte des premiers moyens d'arrêts qui permettent d'introduire l'insert 2 dans le trou de passage 11 de la butée 1 à partir du premier bord 13 pour le passage 11, de terminer l'introduction de l'insert 2 dans la butée 1 lorsque la tête 21 de l'insert 2 vient en appui sur la partie conformée en conséquence du trou de passage 11, et de sécuriser l'insert dedans le trou de passage 11 par le fait que les dents 26 en tant que premier moyen anti-retour se logent dans une partie appropriée réalisée dans la butée 1.

L'insert 2 comporte par ailleurs des seconds moyens anti-retour 27 permettant l'introduction du goujon 3 dans l'insert 2, mais empêchant le goujon ensuite d'en sortir par translation axiale.

En effet, l'insert 2 comporte des éléments 27 disposés sur une paroi 28 de la partie creuse 23 de l'insert 2. Les éléments 27 s'étendent vers l'axe longitudinal A de la partie creuse 23 de l'insert 2 et vers la tête 21 de l'insert 2. Les éléments 27 enferment ainsi entre eux et la paroi 28 de la partie creuse 23 un angle aigu, ce qui leur permet de se déformer élastiquement pendant l'insertion du goujon 3 dans l'insert 2 de manière à épouser élastiquement et plus ou moins entièrement la paroi 28 et pour s'étendre ensuite, c'est-à-dire lorsque la butée 1 de l'invention est assemblée sur le goujon 3, avec un angle aigu vers l'axe longitudinal A de la partie creuse 23 et vers la tête 21 de l'insert 2.

L'insert 2 comporte deux extrémités opposées constituées d'une part par la tête 21 et d'autre part par les dents 26. La première extrémité 21, qui est opposée à la seconde extrémité 26 par laquelle l'insert 2 est introduit dans le trou de passage 11 de la butée 1, comporte un trou 29 conformé pour recevoir un outil pour le démontage de la butée par dévissage. Le trou 29 peut former un trou borgne. Mais le trou 29 peut aussi former un seul passage avec la partie creuse 23 de l'insert 2, le choix entre les deux variantes n'ayant pas d'importance pour la réalisation du principe de l'invention.

Lors de l'assemblage de la butée de l'invention, les dents 26 de l'insert 2 sont posées sur le premier bord 13 du trou de passage 11 de la butée 1 et l'insert 2 est ensuite enfoncé dans le trou de passage 11 par translation axiale. Pendant cette introduction, les pattes 24 fléchissent vers l'intérieur et se redressent à la fin de l'introduction lorsque les dents 26 viennent se loger sur l'épaulement 15 formé en retrait par rapport au second bord 14 du trou de passage 11 de la butée 1 où, selon une variante non représentée dans les dessins, sur le second bord 14 même du trou de passage 11.

L'insert 2 est ainsi arrêté, c'est-à-dire immobilisé, dans le trou de passage 11 de la butée 1 par les premiers moyens d'arrêt qui sont constitués par la tête 21 et les dents 26 et qui prennent appui respectivement sur le premier bord 13 en ce qui concerne la tête 21 et sur le second bord 14 ou un épaulement en retrait 15 en ce qui concerne les dents 26. Ces dispositions assurent sans moyens supplémentaires tels que des moyens rapportés, que l'insert 2 qui a pu être introduit dans le trou de passage 11 de la butée 1 est ensuite empêché d'en sortir par quelque mouvement que ce soit, à moins d'intervenir avec des outils avec lesquels on déforme ou casse l'insert.

L'immobilisation de l'insert 2 dans le trou de passage 11 de la butée 1 est ensuite renforcée lorsque la butée est montée dans le véhicule en plaçant la butée avec l'insert sur le goujon 3 et en appuyant sur la butée 1 jusqu'à ce que le goujon 3 soit entièrement introduit dans la partie creuse 23 de l'insert 2. Lorsque le goujon est introduit dans l'insert 2, les pattes 26 ne peuvent plus fléchir vers l'intérieur de l'insert 2, ce qui empêche un arrachement accidentel de la butée 1.

Lorsque l'ensemble formé par la butée 1 et l'insert 2 est griffé sur le goujon 3, qui est, par exemple, soudé sur le tablier d'un véhicule automobile, les éléments 27 disposés sur la paroi 28 de la partie creuse 23 de l'insert 2 (éléments qui sont préférentiellement réalisés en une seule pièce avec le corps 22 de l'insert 2), sont élastiquement déformés de manière à épouser élastiquement et plus ou moins entièrement la paroi 28 pendant l'introduction du goujon 3 dans l'insert 2. Lorsque le goujon 3 est entièrement introduit dans l'insert 2, les éléments 27 viennent se prendre sur un filetage 31 du goujon soudé 3.

Le goujon 3 peut être pourvu d'un filetage régulier 31. Toutefois, en variante, le goujon 3 peut également être pourvu d'un striage dont les stries sont orientées sensiblement perpendiculairement à l'axe longitudinal A, lequel striage est alors pourvu d'interruptions produisant un effet comparable à celui d'un filetage.

Grâce à cette disposition de l'invention, le dispositif de l'invention, lorsqu'il doit être démonté, peut être dévissé du goujon 3 au lieu d'en être enlevé de force par un mouvement de translation axial.

En effet, pour démonter le dispositif de l'invention, on insère un outil tel un tournevis ou une clé ayant une tête dont la forme est complémentaire à celle du trou 29. En tournant l'outil dans le sens contraire des aiguilles d'une montre, comme cela est représenté sur la figure 4, le dispositif de l'invention est dévissé du goujon 3 et en est enlevé par un mouvement de rotation procurant au dispositif un mouvement de translation axial. Ainsi, les seconds moyens anti-retours 27 ont permis l'introduction du goujon 3 dans l'insert 2, mais empêche le goujon 3 ensuite d'en sortir par translation axiale.

## Revendications

1. Assemblage réversible d'une pièce (1) sur un support fixe, la pièce (1) étant pourvue d'un trou de passage (11) traversant la pièce (1) et ayant une paroi (12) s'étendant entre un premier bord (13) et un second bord (14) opposé au premier bord (13) du trou de passage (11), **caractérisé en ce qu'**il comprend
- un goujon (3) immobile et solidaire du support fixe, et
- un insert (2) creux conformé pour être placé dans le trou de passage (11) de la pièce (1) et pour recevoir ultérieurement, dans sa partie creuse (23), ledit goujon (3), l'insert (2) comportant des premiers moyens d'arrêt (21, 26) avec des premiers moyens anti-retour (26) permettant l'introduction de l'insert (2) dans le trou de passage (11) de la butée (1), mais empêchant l'insert (2) ensuite d'en sortir, et des seconds moyens anti-retour (27) permettant l'introduction du goujon (3) dans l'insert (2), mais empêchant le goujon (3) ensuite d'en sortir par translation axiale, l'assemblage étant démontable par rotation de l'insert (2) autour du goujon (3).

2. Assemblage selon la revendication 1, **caractérisé en ce que** l'insert (2) comporte deux extrémités opposées (21, 23) dont l'une (21) est conformée pour limiter la course d'introduction de l'insert (2) dans la butée (1), cette extrémité (21) faisant partie des premiers moyens d'arrêt (21, 26).

3. Assemblage selon la revendication 2, **caractérisé en ce que** les premiers moyens anti-retour comportent des pattes flexibles (24) avec des extrémités libres (26) orientées vers l'extérieur de l'insert (2) et conformées pour fléchir radialement vers l'intérieur de l'insert (2) lors de l'introduction de l'insert (2) dans le trou de passage (11) de la butée (1) et pour s'accrocher, à la fin de la mise en place de l'insert (2), sur une partie (15) appropriée de la butée (1).

4. Dispositif selon la revendication 3, **caractérisé en ce que** les pattes flexibles (24) sont orientées sensiblement parallèlement à un axe longitudinal (A) de l'insert (2), leur longueur étant déterminée de manière à ce que les extrémités libres (26) puissent s'accrocher, à la fin de la mise en place de l'insert (2), sur le second bord (14) du trou de passage (11) de la butée (1).

5. Assemblage selon la revendication 3, **caractérisé en ce que** les pattes flexibles (24) sont orientées sensiblement parallèlement à un axe longitudinal (A) de l'insert (2), leur longueur étant déterminée de manière à ce que les extrémités libres (26) puissent s'accrocher, à la fin de la mise en place de l'insert (2), sur un épaulement (15) formé en retrait par rapport au second bord (14) du trou de passage (11) de la butée (1).

6. Assemblage selon l'une quelconque des revendications 1 à 5, **caractérisé en ce que** les seconds moyens anti-retour comportent des éléments (27) disposés sur une paroi (28) de la partie creuse (23) de l'insert (2) et conformés pour s'étendre vers un axe longitudinal (A) de la partie creuse (23) de l'insert (2) avant une première utilisation de l'insert, pour épouser élastiquement et plus ou moins entièrement la paroi (28) pendant l'introduction du goujon (3) dans l'insert (2) et pour s'étendre à nouveau vers l'axe longitudinal (A) de la partie creuse (23) après l'insertion du goujon (3).

7. Assemblage selon la revendication 6, **caractérisé en ce que** le goujon (3) comporte un filetage (31) s'étendant au moins sur une partie de l'étendue axiale du goujon (3) et permettant aux éléments (27) disposés sur la paroi (28) de la partie creuse (23) de l'insert (2) de s'y engager après l'insertion du goujon (3).

8. Assemblage selon l'une quelconque des revendications 1 à 7, **caractérisé en ce que** l'insert (2) comporte deux extrémités opposées (21, 26) et est pourvu sur la première (21) de ces extrémités (21, 26), qui est opposée à la seconde extrémité (26) par laquelle l'insert (2) est introduit dans le trou de passage (11) de la butée (1), d'un trou (29) conformé pour recevoir un outil pour le démontage de la butée (1) par dévissage.

9. Assemblage selon la revendication 8, **caractérisé en ce que** le trou (29) conformé pour recevoir un outil forme un seul passage avec la partie creuse (2) de l'insert (1).

10. Assemblage selon la revendication 8, **caractérisé en ce que** le trou (29) conformé pour recevoir un outil forme un trou borgne.

11. Assemblage selon l'une quelconque des revendications précédentes, **caractérisé en ce que** la pièce (1) forme butée d'un organe monté mobile sur le support fixe.

12. Véhicule, notamment véhicule automobile, **caractérisé en ce qu'**il comprend un assemblage selon la revendication 11.
